# EUROPÄISCHE PATENTSCHRIFT

(11) **EP 2 769 866 B1**
(45) Veröffentlichungstag und Bekanntmachung des Hinweises auf die Patenterteilung: **07.10.2020**
(21) Anmeldenummer: 14156580.4
(22) Anmeldetag: 25.02.2014
(51) Int. Cl.: B60K 26/02, B60W 50/10

(54) **Fahrerassistenzsystem für die Beschleunigung eines Fahrzeugs mittels eines Fahrpedals**
Driver assistance system for the acceleration of a vehicle by means of an accelerator pedal
Système d'assistance du conducteur pour l'accélération d'un véhicule au moyen d'une pédale d'accélération

(30) Priorität: 25.02.2013 DE 102013003147
(43) Veröffentlichungstag der Anmeldung: 27.08.2014
(73) Patentinhaber: Audi AG, 85045 Ingolstadt (DE)
(72) Erfinder: Lepczyk, Daniel, 86529 Schrobenhausen (DE); Dietrich, Maximilian, 81245 München (DE); Ringal, Johann, 85051 Ingolstadt (DE)

(56) Entgegenhaltungen:
- DE-A1-102004 026 407
- DE-A1-102009 045 512
- DE-A1-102010 029 467
- US-A1- 2007 276 577

## Beschreibung

Die Erfindung betrifft ein Fahrerassistenzsystem für die Beschleunigung eines Fahrzeugs mittels eines Fahrpedals nach dem Oberbegriff des Anspruchs 1.

Ein gattungsgemäßes Fahrerassistenzsystem ist aus DE 10 2010 041 539 A1 bekannt. Dieses Fahrerassistenzsystem umfasst eine Steuereinrichtung, die Abhängigkeit von Fahrparametern und/oder Fahrzeugparametern eine verbrauchsoptimale Beschleunigung mit entsprechend zugeordneten Antriebsleistungen ermittelt. Dazu wird eine Fahrpedalkennlinie für beruhigtes und verbrauchsoptimales Fahren vorgegeben, die insbesondere einen verbrauchsgünstigen Bereich und ab einem definierten Pedalwinkel einen Plateaubereich vorsieht, in dem bei einem weiteren Durchtreten des Fahrpedals keine Erhöhung der Antriebsleistung erfolgt. Der Fahrer soll durch eine gegebenenfalls spürbare Änderung der Antriebsleistung eine Rückmeldung erkennen können, in welchem Bereich der Fahrpedalkennlinie er sich aktuell befindet. Zudem wird dem Fahrer durch eine optische Anzeige eine Empfehlung für den Fahrbetrieb gegeben, nach der er sich richten kann. Nachteilig lenken hier optische und/oder akustische Empfehlungen vom Fahren ab und eine spürbare Änderungen der Antriebsleistung, beispielsweise durch eine starke Beschleunigungszunahme oder ein größeres Motorgeräusch sind nur durch einen entsprechend unerwünschten starken Knick in der Fahrpedalkennlinie erreichbar, der das Fahrverhalten negativ beeinflussen kann.

Allgemein sind haptische Rückmeldungen an den Fahrer eines Fahrzeugs durch Druckpunkte an Betätigungshebeln, Raststellungen an Drehgriffen, etc. bekannt. Eine haptische Rückmeldung an den Fahrer eines Motorrads ist aus DE 10 2005 012 775 A1 bekannt, in dem beim Erreichen oder Überschreiten eines vorgegebenen Schlupf-Grenzwerts zwischen einem Antriebsrad und einem weiteren Rad eine erhöhte Rückstellkraft an einem Gasdrehgriff oder eine Vibration am Gasdrehgriff oder einem Lenkergriff eingestellt wird. In einer weiteren Ausgestaltung wird bei einem Überschreiten eines noch weiter erhöhten Schlupf-Grenzwerts automatisch die Antriebsleistung reduziert. Eine solche Vorrichtung ist eine Sicherheitseinrichtung, die ausschließlich der Erhöhung der Fahrsicherheit dient.

DE 10 2009 045 512 A1 offenbart ein Steuergerät für ein Fahrerassistenzsystem, das ausgelegt ist, eine Widerstandskennlinie eines Fahrpedals eines Kraftfahrzeugs auszuwählen, wobei das Steuergerät ausgelegt ist, die Widerstandskennlinie auf Grundlage einer Verkehrslage und/oder einer Topographie der befahrenen Straße auszuwählen.

Aufgabe der Erfindung ist es, ein Fahrassistenzsystem für die Beschleunigung eines Fahrzeugs mittels eines Fahrpedals vorzuschlagen, mit dem der Fahrer einfach erkennbare, eindeutige und vom Fahrbetrieb nicht ablenkende Fahranweisungen für eine effiziente Beschleunigung erhält.

Diese Aufgabe wird dadurch gelöst, dass einer Steuereinrichtung des Fahrerassistenzsystems eine Ist-Geschwindigkeit zugeführt und eine gewünschte Sollgeschwindigkeit vorgegeben wird. Auf der Grundlage von aktuellen Fahrparametern und/oder Fahrzeugparametern ermittelt die Steuereinrichtung eine optimierte, effiziente Beschleunigung zur Erreichung der gewünschten Sollgeschwindigkeit. Weiter ermittelt die Steuereinrichtung die für eine solche effiziente Beschleunigung erforderliche und sich während des Beschleunigungsvorgangs zwangsläufig ändernde Fahrpedalstellung als aktuellen Soll-Pedalwinkel. Dem Fahrpedal ist als aktivem Fahrpedal ein von der Steuereinrichtung steuerbares Stellelement zugeordnet, welches den vom Fahrer durch eine Pedalbetätigung wählbaren Fahrpedalwinkel auf den für eine effiziente Beschleunigung vorgegebenen Soll-Pedalwinkel als Sollwert-Schwelle limitiert.

Im aktuellen Beschleunigungsfall braucht der Fahrer das Fahrpedal zum Erhalt der ermittelten effizienten Beschleunigung lediglich bis zu der vom Stellelement vorgegebenen Limitierung zu betätigen, welche sich während des Beschleunigungsvorgangs ändert. Wenn der Fahrer das Fahrpedal nicht bis zur Limitierung durchtritt, erfolgt eine vergleichsweise geringere Beschleunigung. Entsprechend wird bei einer Rücknahme des Fahrpedals von der Limitierung die Beschleunigung, beispielsweise bei kritischen Fahrsituationen, im Vergleich zur effizienten Beschleunigung verringert.

In einer besonders bevorzugten Weiterbildung ist diese limitierende Sollwert-Schwelle für das Fahrpedal als vom Fahrer bei Bedarf überdrückbare Druckpunktschwelle ausgebildet. Der Fahrer erhält somit über die Pedalbetätigung durch die Sollwertschwelle einen deutlich fühlbaren Hinweis auf eine vorgegebene effiziente Beschleunigung, kann jedoch durch Überdrücken dieser Sollwert-Schwelle jederzeit auf einfache Weise gewollt und insbesondere in kritischen Fahrsituationen eine vergleichsweise höhere Antriebsleistung und größere Beschleunigung abrufen.

In einer konkreten Ausführung wird vorzugsweise mittels des Stellelements die Sollwert-Schwelle beziehungsweise die überdrückbare Druckpunktschwelle so ausgelegt, dass für eine anfängliche Beschleunigungsphase ein weitgehend konstanter Soll-Pedalwinkel vorgeben wird. Im weiteren Beschleunigungsverlauf wird dieser Soll-Pedalwinkel dergestalt geändert, dass dann durch eine sukzessive Rückstellung des Fahrpedals mit einem entsprechenden Zurückschieben des Fahrerfußes der Pedalwinkel so weit verkleinert wird, dass dann die vorgegebene Sollgeschwindigkeit erreicht und eingehalten wird.

Die Sollgeschwindigkeit kann als Wunschgeschwindigkeit vom Fahrer mittels einer Vorwahleinrichtung vorgegeben und für das Fahrerassistenzsystem aktiviert werden. Eine solche Vorwahleinrichtung kann mittels eines Wählhebels mit zugeordneter Anzeige und/oder mit einem Tastenfeld realisiert werden.

Alternativ oder zusätzlich zu einer solchen Vorwahleinrichtung kann eine Sollgeschwindigkeit als zulässige Höchstgeschwindigkeit auch mittels einem Navigationssystem oder einer Verkehrszeichenerkennung vorgegeben werden.

Für den Betrieb des Fahrerassistenzsystems ist es erforderlich, eine optimierte effiziente Beschleunigung und zugeordnete Soll-Pedalwinkel zu ermitteln und vorzugeben. Dies kann unter Berücksichtigung und Auswertung von Fahr- und Fahrzeugparametern mit an sich bekanten Methoden erfolgen. Als wesentliche Parameter sind dabei der Kraftstoffverbrauch und/oder die zur Verfügung stehende Antriebsleistung und/oder der Dynamikanspruch des Fahrers und/oder aktuelle erfasste Routendaten, wie Steigungen, Gefälle, Kurven, etc. zu berücksichtigen.

Unter Einbeziehung solcher Parameter können dann eine effiziente Beschleunigung und die zugeordneten Soll-Pedalwinkel aus abgelegten Kennfeldern und/oder mittels Rechenoperationen ermittelt werden.

Je nach der Berücksichtigung und Gewichtung einzelner Parameter ergeben sich unterschiedliche "effiziente" Beschleunigungen. Der Begriff "effiziente Beschleunigung" bedeutet hier somit nicht nur eine einzige Möglichkeit für eine bestimmte Beschleunigung sondern ist abhängig von der Systemauslegung. Beispielsweise kann die Vorgabe einer effizienten Beschleunigung einerseits mehr kraftstoffverbrauchsgünstig oder andererseits mehr dynamisch und beschleunigungsoptimiert ausgelegt sein. Solche unterschiedliche Auslegungen können herstellerseitig vorgenommen werden. Denkbar ist auch eine Änderung der Auslegung durch einen Werkstatteingriff oder durch eine Stelleinrichtung im Fahrzeug für eine individuelle Einstellung der Auslegung durch den Fahrer.

Für eine wahlweise Unterstützung des Fahrers durch das Fahrerassistenzsystem soll dieses durch ein Betätigungselement zuschaltbar und abschaltbar sein.

Anhand einer Zeichnung wird die Erfindung weiter erläutert.

Es zeigen:
- Fig. 1: eine Beschleunigungskurve von einer Ist-Geschwindigkeit auf eine Soll-Geschwindigkeit mit zugeordneten Fahrpedalstellungen entsprechend einer Sollwert-Schwelle, und
- Fig. 2: drei unterschiedliche Beschleunigungskurven, wie sie nach dem Stand der Technik bei individuell unterschiedlichen Beschleunigungen erhalten werden.

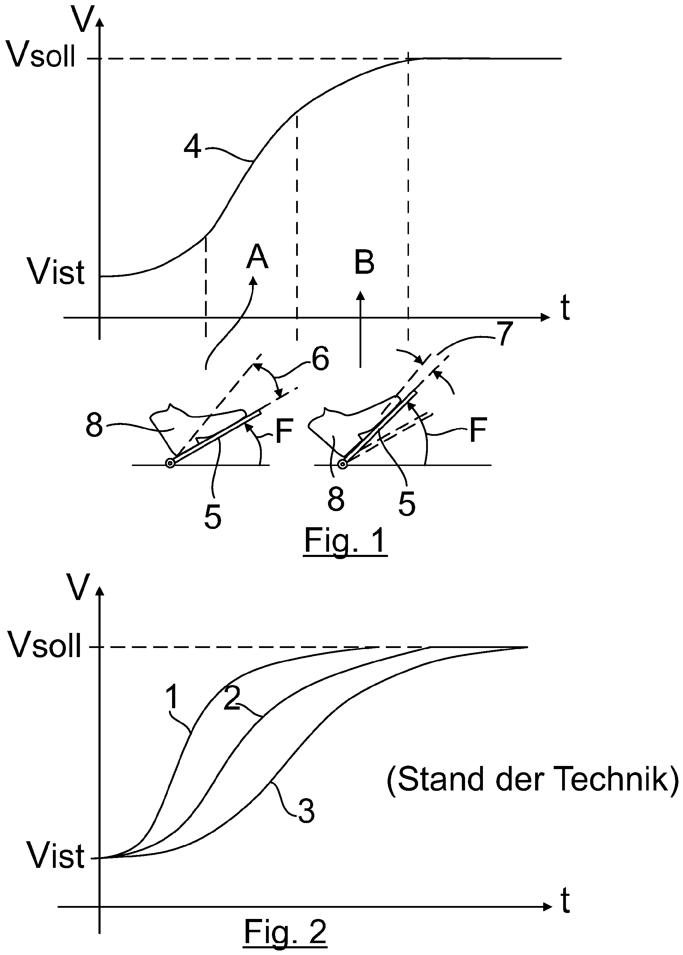

In Fig. 2 ist in einem Geschwindigkeits-Zeitdiagramm eine aktuelle Ist-Geschwindigkeit Vᵢₛₜ sowie eine von einem Fahrer gewünschte Soll-Geschwindigkeit Vₛₒₗₗ eingezeichnet. Weiter sind mit den Bezugszeichen 1, 2, 3 drei Beschleunigungskurven über der Zeit t eingezeichnet. Die Kurve 1 entspricht einer hohen, aggressiven Beschleunigung und die Kurve 3 entspricht einem lang anhaltenden Beschleunigungsvorgang mit einem gemächlichen Erreichen der Soll-Geschwindigkeit Vₛₒₗₗ. Die Kurve 2 liegt dazwischen. Ein solches sehr unterschiedliches Beschleunigungsverhalten kann unterschiedlichen Fahrern und gegebenenfalls auch demselben Fahrer zugeordnet werden und hängt im Wesentlichen vom aktuellen Gemütszustand, der Fahrsituation, der Straßenbeschaffenheit, dem Fahrzeugaufkommen, etc. ab. Insbesondere hinsichtlich des Kraftstoffverbrauchs und damit auch der Beeinträchtigung der Umwelt ergeben sich bei unterschiedlichen Beschleunigungsvorgängen (zum Teil) nachteilige Unterschiede. Eine aggressive Beschleunigung aber auch eine zu geringe Beschleunigung wirkt sich negative auf den Kraftstoffverbrauch aus. Erfindungsgemäß soll daher vom Fahrer möglichst oft mit einer vorgegebenen "effizienten Beschleunigung" beschleunigt werden. Eine solche auf der Grundlage diverser Parameter ermittelte und vorgegebene Beschleunigungskurve 4 ist im Geschwindigkeits-Zeit-Diagramm in Fig. 1 dargestellt. Damit soll in einem effizienten Beschleunigungsvorgang ausgehend von einer aktuellen Ist-Geschwindigkeit Vᵢₛₜ eine gewünschte Soll-Geschwindigkeit V_{Soll} erreicht werden.

Dazu wird in einer ersten mit A bezeichneten Beschleunigungsphase mit einer hohen Beschleunigung eine Sollwert-Schwelle als überdrückbare Druckpunktschwelle für ein Fahrpedal 5 bei einem im Wesentlichen konstanten Fahrpedalwinkel 6 gehalten. Diese Sollwert-Schwelle wird durch ein steuerbares Stellelement (dargestellt durch den Kraftpfeil F) vorgegeben. Wenn der Fahrer mit seinem Fahrerfuß 8 das Fahrpedal 5 bis zur Sollwert-Schwelle (ohne diese bewusst zu überdrücken) betätigt, wird der vom Fahrerassistenzsystem vorgegebene effiziente Beschleunigungsverlauf gemäß der Beschleunigungskurve 4 in der Beschleunigungsphase A erreicht.

Der flachere Übergang der Beschleunigungskurve 4 in die Soll-Geschwindigkeit Vₛₒₗₗ erfolgt in der Beschleunigungsphase B, indem der vorhergehende Fahrpedalwinkel 6 sukzessive auf einen kleineren Fahrpedalwinkel 7 verkleinert wird. Dazu wird mit dem Stellelement die Sollwertschwelle für das Fahrpedal 5 zurückgefahren (dargestellt durch den Kraftpfeil F), wodurch der Fahrerfuß 8 entsprechend langsam zurückgeschoben wird. Um den vom Fahrerassistenzsystem vorgegebenen effektiven Beschleunigungsverlauf zu erreichen ist es erforderlich, dass der Fahrer auch in der Beschleunigungsphase B das Fahrpedal 5 bis zur vorgegebenen zurückfahrenden Sollwertschwelle (ohne diese zu Überdrücken) betätigt.

Damit wird dem Fahrer eine Unterstützung zur Verfügung gestellt, effizient von der Ist-Geschwindigkeit auf die Soll-Geschwindigkeit zu beschleunigen.

## Patentansprüche

1. Fahrerassistenzsystem für die Beschleunigung eines Fahrzeugs mittels eines Fahrpedals (5),
mit einer Steuereinrichtung, der eine Ist-Geschwindigkeit (Vᵢₛₜ) zugeführt und der eine Soll-Geschwindigkeit (Vₛₒₗₗ) vorgegeben wird und die aufgrund von Fahrparametern und/oder Fahrzeugparametern eine optimierte, effiziente Beschleunigung ermittelt und vorgibt,
**dadurch gekennzeichnet,**
**dass** von der Steuereinrichtung ein sich entsprechend der vorgegebenen, effizienten Beschleunigung ändernder Fahrpedalwinkel als Soll-Pedalwinkel (6, 7) ermittelt wird, und
**dass** ein von der Steuereinrichtung steuerbares Stellelement (Pfeil F) mit dem Fahrpedal (5) als aktivem Fahrpedal wirkverbunden ist, wobei mit dem Stellelement (Pfeil F) der vom Fahrer (Fahrerfuß 8) durch Pedalbetätigung wählbare Fahrpedalwinkel jeweils auf den Soll-Pedalwinkel (6, 7) als Sollwert-Schwelle limitiert ist.

2. Fahrerassistenzsystem nach Anspruch 1, **dadurch gekennzeichnet, dass** die Sollwert-Schwelle als vom Fahrer bei Bedarf überdrückbare Druckpunktschwelle ausgebildet ist.

3. Fahrerassistenzsystem nach Anspruch 1 oder Anspruch 2, **dadurch gekennzeichnet, dass** mittels des Stellelements (Pfeil F) die Sollwert-Schwelle beziehungsweise die überdrückbare Druckpunktschwelle so ausgelegt ist, dass für eine anfängliche Beschleunigungsphase (A) ein weitgehend konstanter Soll-Pedalwinkel (6) vorgegeben wird, der dann im weiteren Beschleunigungsverlauf (B) sukzessive durch eine Pedalrückstellung mit einem entsprechenden Zurückschieben das Fahrerfußes (7) auf einen Wert (Soll-Pedalwinkel 7) zur Einhaltung der Sollgeschwindigkeit verkleinert wird.

4. Fahrerassistenzsystem nach einem der Ansprüche 1 bis 3, **dadurch gekennzeichnet, dass** die Soll-Geschwindigkeit (Vₛₒₗₗ) als Wunschgeschwindigkeit vom Fahrer mittels einer Vorwahleinrichtung insbesondere mittels eines Wählhebels mit zugeordneter Anzeige und/oder mittels eines Tastenfelds vorgebbar und für das Fahrerassistenzsystem aktivierbar ist.

5. Fahrerassistenzsystem nach einem der Ansprüche 1 bis 3, **dadurch gekennzeichnet, dass** die Soll-Geschwindigkeit (Vₛₒₗₗ) als zulässige Höchstgeschwindigkeit mittels einem Navigationssystem und/oder einer Verkehrszeichenerkennung vorgebbar ist.

6. Fahrerassistenzsystem nach einem der Ansprüche 1 bis 5, **dadurch gekennzeichnet, dass** bei der Ermittlung der optimierten, effizienten Beschleunigung (Beschleunigungskurve 4) und der zugeordneten Soll-Pedalwinkel (6, 7) als Fahr- und Fahrzeugparameter insbesondere der Kraftstofferbrauch, und/oder die Antriebsleistung und/oder der Dynamikanspruch und/oder aktuelle Routendaten wie Steigungen, Gefälle, Kurven etc. berücksichtigt werden.

7. Fahrerassistenzsystem nach Anspruch 6, **dadurch gekennzeichnet, dass** die effiziente Beschleunigung (Beschleunigungskurve 4) und die zugeordneten Soll-Pedalwinkel (6, 7) aus abgelegten Kennfeldern und/oder mittels Rechenoperationen ermittelt werden.

8. Fahrerassistenzsystem nach Anspruch 6 oder Anspruch 7, **dadurch gekennzeichnet, dass** die Gewichtung bei der Berücksichtigung von Parametern bei der Auslegung des Systems und/oder vom Fahrer einstellbar ist.

9. Fahrerassistenzsystem nach einem der Ansprüche 1 bis 8, **dadurch gekennzeichnet, dass** das Fahrerassistenzsystem wahlweise zu- und abschaltbar ist.

## Claims

1. Driver assistance system for the acceleration of a vehicle by means of an accelerator pedal (5),
having a control device, to which an actual speed (V_{actual}) is supplied and for which a target speed (V_{target}) is specified and which determines and specifies an optimised, efficient acceleration based on driving parameters and/or vehicle parameters,
**characterised in**
**that** the control device determines as the target pedal angle (6, 7) an accelerator pedal angle that changes in accordance with the predefined, efficient acceleration, and
an actuating element (arrow F) controllable by the control device is operatively connected to the accelerator pedal (5) as an active accelerator pedal, wherein with the actuating element (arrow F) the accelerator pedal angle selectable by the driver (driver's foot 8) by pedal actuation is limited respectively to the target pedal angle (6, 7) as the target threshold.

2. Driver assistance system according to claim 1, **characterised in that** the target threshold is designed as a pressure point threshold which can be overridden by the driver if necessary.

3. Driver assistance system according to claim 1 or claim 2, **characterised in that** the target threshold or the pressure point threshold that can be overridden is designed by means of the actuating element (arrow F) such that a largely constant target pedal angle (6) is specified for an initial acceleration phase (A), which is then successively reduced in the further acceleration curve (B) by resetting the pedal with a corresponding pushing back of the driver's foot (7) to a value (target pedal angle 7) to maintain the target speed.

4. Driver assistance system according to any one of claims 1 to 3, **characterised in that** the target speed (V_{target}) can be specified as the desired speed by the driver by means of a preselection device, in particular by means of a selector lever with an associated display and/or by means of a keypad, and can be activated for the driver assistance system.

5. Driver assistance system according to any one of claims 1 to 3, **characterised in that** the target speed (V_{target}) can be specified as the maximum permissible speed by means of a navigation system and/or traffic sign recognition.

6. Driver assistance system according to any one of claims 1 to 5, **characterised in that** when determining the optimised efficient acceleration (acceleration curve 4) and the assigned target pedal angle (6, 7), the fuel consumption and/or the drive power and/or the dynamic requirements and/or current route data, such as inclines, slopes, curves, etc., are in particular taken into account as driving and vehicle parameters.

7. Driver assistance system according to claim 6, **characterised in that** the efficient acceleration (acceleration curve 4) and the assigned target pedal angles (6, 7) are determined from stored characteristic fields and/or by means of arithmetic operations.

8. Driver assistance system according to claim 6 or claim 7, **characterised in that** the weighting can be set by taking into account parameters in the design of the system and/or can be set by the driver.

9. Driver assistance system according to any one of claims 1 to 8, **characterised in that** the driver assistance system can be optionally switched on and off.

## Revendications

1. Système d'assistance au conducteur pour l'accélération d'un véhicule au moyen d'une pédale d'accélération (5),
avec un appareil de commande auquel est envoyé une vitesse réelle (Vᵢₛₜ) et pour lequel une vitesse théorique (Vₛₒₗₗ) est prédéfinie et qui détermine et définit sur la base de paramètres de conduite et/ou de paramètres du véhicule, une accélération efficiente optimisée,
**caractérisé en ce**
**qu'**un angle de pédale d'accélération se modifiant en fonction de l'accélération efficiente prédéfinie par l'appareil de commande est déterminé en tant qu'angle de pédale théorique (6, 7), et
**qu'**un élément de réglage (flèche F) pouvant être commandé par l'appareil de commande est lié activement avec la pédale d'accélération (5) en tant que pédale d'accélération active, dans lequel avec l'élément de réglage (flèche F), l'angle de pédale d'accélération pouvant être sélectionné par le conducteur (pied du conducteur 8) par actionnement de la pédale est limité respectivement à l'angle de pédale théorique (6, 7) en tant que seuil de valeur théorique.

2. Système d'assistance au conducteur selon la revendication 1, **caractérisé en ce que** le seuil de valeur théorique est formé comme un seuil de point de pression pouvant être forcé par le conducteur si besoin.

3. Système d'assistance au conducteur selon la revendication 1 ou la revendication 2, **caractérisé en ce qu'**au moyen de l'élément de réglage (flèche F), le seuil de valeur théorique ou le seuil de point de pression pouvant être forcé est conçu de telle sorte que pour une phase d'accélération initiale (A), un angle de pédale théorique (6) largement constant qui est ensuite réduit lors de l'évolution ultérieure de l'accélération (B) successivement par un relâchement de la pédale avec un recul correspondant du pied du conducteur (7) à une valeur (angle de pédale théorique 7) destinée à maintenir la vitesse théorique, est prédéfini.

4. Système d'assistance au conducteur selon l'une quelconque des revendications 1 à 3, **caractérisé en ce que** la vitesse théorique (Vₛₒₗₗ) peut être prédéfinie en tant que vitesse souhaitée par le conducteur au moyen d'un appareil de présélection en particulier au moyen d'un levier de sélection avec des messages associés et/ou au moyen d'un clavier et peut être activé pour le système d'assistance au conducteur.

5. Système d'assistance au conducteur selon l'une quelconque des revendications 1 à 3, **caractérisé en ce que** la vitesse théorique (Vₛₒₗₗ) peut être prédéfinie en tant que vitesse maximale autorisée au moyen d'un système de navigation et/ou d'une reconnaissance des panneaux de signalisation.

6. Système d'assistance au conducteur selon l'une quelconque des revendications 1 à 5, **caractérisé en ce que** lors de la détermination de l'accélération efficience optimisée (courbe d'accélération 4) et de l'angle de pédale théorique associé (6, 7) en tant que paramètre de conduite et du véhicule, en particulier la consommation de carburant et/ou la puissance motrice et/ou la dynamique et/ou des données d'itinéraire actuelles telles que côtes, descentes, virages, etc. sont prises en compte.

7. Système d'assistance au conducteur selon la revendication 6, **caractérisé en ce que** l'accélération efficiente (courbe d'accélération 4) et l'angle de pédale théorique associé (6, 7) sont déterminés à partir de diagrammes caractéristiques enregistrés et/ou au moyen de calculs.

8. Système d'assistance au conducteur selon la revendication 6 ou la revendication 7, **caractérisé en ce que** la vitesse peut être réglée en tenant compte de paramètres lors de la conception du système et/ou par le conducteur.

9. Système d'assistance au conducteur selon l'une quelconque des revendications 1 à 8, **caractérisé en ce que** le système d'assistance au conducteur peut être à volonté activé et désactivé.
